Europäisches Patentamt

European Patent Office

Office européen des brevets

(11) Publication number: 0 631 859 A2

# EUROPEAN PATENT APPLICATION

(21) Application number: 94108089.7

(22) Date of filing: 25.05.94

(51) Int. Cl.⁶: **B29D 7/01**, C09J 7/00, **B65B 11/00**

(30) Priority: 28.05.93 DE 4317979

(43) Date of publication of application:
04.01.95 Bulletin 95/01

(84) Designated Contracting States:
DE ES FR IT

(71) Applicant: **MINNESOTA MINING AND MANUFACTURING COMPANY**
3M Center,
P.O. Box 33427
St. Paul,
Minnesota 55133-3427 (US)

(72) Inventor: **Kitzer, Peter**
c/o 3M Deutschland GmbH,
P.O. Box 100422
D-41404 Neuss (DE)
Inventor: **Kreckel, Karl**
c/o 3M Deutschland GmbH,
P.O. Box 100422
D-41404 Neuss (DE)
Inventor: **Thürmer, Jörg**
c/o 3M Deutschland GmbH,
P.O. Box 100422
D-41404 Neuss (DE)

(74) Representative: **VOSSIUS & PARTNER**
Siebertstrasse 4
D-81675 München (DE)

(54) **Plastic tape, method of use of plastic tape and process for manufacture of a body wrapped with a plastic tape.**

(57) A plastic tape and an adhesive tape are provided, as well as a method of manufacture of a body wrapped with these tapes, whereby a tape is used which has an initial elastic area, an adjacent area of plastic deformation and, finally, an area with greatly increasing tensile up to the breaking point. The advantage of the invention lies in that a simple, low-cost and material-saving process is provided which makes it possible to form a highly conformable wrapping and a highly flexible wrapped body.

FIG. 2

○ TENSILE
□ ELASTIC MODULUS

EP 0 631 859 A2

The invention concerns a plastic tape, an adhesive tape with a plastic tape as carrier, especially a plastic tape or an adhesive tape which is suitable for wrapping around an irregular body, as well as a process for manufacture of a body wrapped with a plastic tape or adhesive tape. The body can be a group of electrical, hydraulic of fiber optic lines or cables, respectively, which are used, for example, in a motor vehicle. In the following, the term "tape" is normally used to mean a plastic tape or an adhesive tape.

Processes are already known whereby several cables or wires are bundled together using plastic bands or strips. Plastic tapes normally used for this purpose are often filled with additives, fillers and/or pigments in order to provide special properties such as flame resistance or special electrical properties. The plastic tapes can be simply wound around the cables or wires or can be coated on one side with an adhesive, for example, a pressure-sensitive adhesive, so that the tape adheres better to itself and to the body around which it is wound.

Because of harsh environments like heat, moisture or aggressive atmospheres to which the wrapped bodies can be exposed, special plastic tapes are often used for these applications. The tapes are used either in uncoated form or in the form of an adhesive tape with an adhesive coating. Polyimide tapes or polyester tapes have been used for such applications, for example. Plasticized PVC, easily modified by means of additives, has been used especially often for wrapping of groups of cable and wire because of economic reasons. Admittedly, chlorine-containing plastics like PVC have disadvantages because of their effect on the environment. For example, these kinds of plastics cannot be incinerated without liberation of toxic gases and cannot be recycled or melted easily. In addition, in the case of plasticized PVC the plasticizer can migrate out of the tape with time, whereby the plastic tape becomes brittle. The plasticizer can also migrate into nearby materials like the adhesive layer of wiring insulation, thereby altering their properties. The most important disadvantage of using PVC tapes for wrapping of irregularly shaped bodies, however, is their unsuitable elongation properties when placed under extending forces and their insufficient ability to conform to irregularly-shaped bodies.

EP-A-0 274 888 describes a halogen-free, thermoplastic elastomer composition which contains a flame-retardant halogen-free filler and at least two elastomers selected from the group consisting of ethylene-propylene copolymers and terpolymers, polyamides, polyesters, polyisobutylene, polyurethanes, acrylic polymers, natural rubber, polybutadiene and polyisoprene or its block copolymers. The elastomer composition is said to be extrudable and have a tensile strength of at least 6.89 MPa and an elongation at break of at least 130%.

US-A-4 536 549 describes a heat-sterilizable film made of a polymeric mixture containing about 10 to about 60 weight per cent propylene-ethylene copolymer and about 40 to about 90 weight percent of a linear low-density polyethylene. The films are especially suitable for the manufacture of heat-sealable bags.

US-A-4 629 639 describes mixtures of propylene polymer, ethylene-vinyl acetate copolymer and optionally a synthetic rubber containing small amounts of a polyterpene resin, which are said to be exceptionally suitable for manufacture of a heat-sealable and sterilizable film as well as for manufacture of sealable containers.

US-A-4 282 284 describes a heat-resistant, elastic electrical insulation tape comprising a porous woven backing provided with an inflammable coating on both sides. On the outer surface of one of the inflammable coatings is an abrasion-proof polymeric coating; whereas on the outer surface of the other inflammable coating there is a layer of adhesive. The insulation tape is especially suited for wrapping wires or cables. In "Kunststofftaschenbuch" 24th Edition, Carl Hanser Verlag Munich Wien, 1989 pages 552-558, and 581, a number of stress strain curves are shown for various plastics, e.g., for low density polyethylene (LDPE). The curves are apparently idealized, and thorough measurements show that LDPE materials have a yield point, i.e., a maximum in the stress-strain curve with the trailing edge having a negative value for the elastic modulus. Such a yield point of plastic tapes has disadvantages if the tape is to be wrapped around an irregular body.

DE-A-33 23 018 discloses a sheet-like material, in particular an adhesive tape, stretched to a greater extent crosswise than lengthwise. Propylene is the main component of this material which is foamed. Foams usually also show a yield point due to the sudden change of the structure during expansion. The adhesive tape is preferable used as a diaper tape, and it is stated that the tape can easily be torn in the crosswise direction.

DE-A-41 32 012 discloses ethylene homopolymers and copolymers and their use in the manufacturing of foils, coatings and photoresists, and aims at providing mechanically strong and extremely expandable foils.

DE-A-40 30385 discloses a transparent heat-shrinking foil made of biaxially oriented polypropylene for the labelling of cylindrical containers such as bottles.

US-A-4 207 374 discloses a flame-retardant, elastic, electrical insulating film material, consisting of a flexible, thermoplastic film carrier having an elastic coating on at least one surface. The film material can be used to make flame-retardant, elastic, electrical insulating tapes with a pressure-sensitive adhesive on one surface.

Extensible tapes with a pressure-sensitive adhesive on one surface are also known from CA-A-778 730 and US-A-3 379 562. The adhesive tapes described in CA-A-778 730 are said to be especially suitable for wrapping of electrical devices and parts.

US-A-4 609 579 describes an extensible tape especially suited for application of a protective wrapping to objects. The tape should be extensible to at least 100%, whereby the extensibility properties are dependent upon temperature and other variables, however. The tape is still flexible after it has been extended, so that it can exert pressure upon the wrapped wires.

The objective of the invention is to provide a plastic tape as well as an adhesive tape comprising a plastic tape as carrier and having an adhesive layer applied to at least one side, which are especially suited for wrapping around irregularly-shaped bodies.

A further objective of the invention is to provide a plastic tape, as well as an adhesive tape comprising a plastic tape as carrier and an adhesive layer applied to at least one side of the plastic carrier, such that the wrapping of irregularly-shaped bodies can be carried out with limited use of force, and such that close contact is provided between the tape and the body, and such that a high flexibility of the wrapped body is insured.

A further objective of the invention is to provide a process for manufacture of a body wrapped with plastic tape, where the wrapping process is simplified and where the quality of the wrapping is improved and material usage is reduced.

A further objective of the invention is to provide a process for wrapping a body, especially an irregularly-shaped body, where the wrapping can be provided using a limited amount of force and whereby the wrapped body maintains high flexibility.

The plastic tape, the adhesive tape and the process described in the present invention fulfill all of the foregoing objectives.

In providing a solution to the problem thus set forth, the basic thought is to specifically select a tape with particular extension characteristics which allows it to be used especially advantageously for wrapping an irregularly-shaped body. The tape of the present invention demonstrates a stress-strain curve (tensile vs. elongation) with an initial, essentially elastic area, a second adjacent area showing plastic deformation with low increase in tensile strength as a function of elongation, and a third area with a large increase in tensile strength as a function of elongation, finally ending in the breaking point. The initial elastic stretching of the tape permits an efficient bundling when the tape is wrapped around bodies consisting of several members, like bundles of wires. The strong plastic deformation provides for good conformability of the tape, and the large increase in tensile strength at higher elongations prevents uncontrolled breakage of the tape.

The different areas of the stress-strain curve of the tape used in the current invention are preferably defined so that at the border between the first and second area the elastic modulus (the increasing or decreasing slope of the stress-strain curve) is at most one-quarter of that in the first area of the curve, and that on the border between the second and third areas the tensile strength is twice as large as that on the border between the first and second areas. This separation into different areas has been determined to be practical through extensive experimentation.

Normally, the first area of the stress-strain curve is not entirely elastic, but includes a transition area into the area of plastic deformation as well, where the elastic modulus drops sharply with increasing elongation, this behavior being expressed at the border between the first and second areas of the curve as defined above. The purely elastic area can be relatively small in comparison with the other areas, meaning that at small extensions the tape reacts in a purely elastic manner.

Preferably, the elastic modulus of the tape in the elastic area is at least 10 N/ mm$^2$. Especially preferred is at least 20 N/mm$^2$. A sufficiently reversible elongation at the beginning of the wrapping process is thereby assured.

In the area of plastic deformation, there is preferably a plateau in the stress-strain curve which is extended over as large an area as possible, meaning that the elastic modulus is zero or increases only slightly at a preferable rate of not more than 5 N/mm$^2$, with a rate of not more than 2 N/mm$^2$ being especially preferred. In this manner, good conformability of the wrapping tape to the wrapped body is assured and especially in the case of wrapping of cables, a high flexibility of the wrapped cables themselves is also assured.

The total elongation of the tape up at the point where it breaks (elongation at break) is preferably at least 300%. Especially preferred is at least 600%. The tape elongation, on the border between the second area (plastic deformation) and the third area where the slope of the curve is great, is preferably at least 250%. Especially preferred is at least 400%. Through use of a tape with a high elongation, significant savings of material can be achieved. A relatively short roll of tape can be used to generate a very long length of material in the elongated state. With use of a tape which can be greatly elongated, the yield is improved and the weight of tape which must be used is greatly reduced.

In the plateau portion of the stress-strain where the elastic modulus is at a minimum (meaning that an especially irreversible elongation is taking place), the tensile strength is preferably 3 to 10 $N/mm^2$. Especially preferred is 5 to 10 $N/mm^2$. It has been demonstrated that if the tensile strength is within this range, the process of the current invention can be carried out manually in a convenient and simple manner. When the process of the current invention is carried out by using a machine, the tensile strength in the area in question can range from about 10 to 50 $N/mm^2$.

In order to prevent an undesirable breaking of the tape during wrapping by mechanical means, the tensile at break of the tape should be at least twice as large, and preferably at least three times as large, as the tensile strength in the area where plastic deformation takes place, that is, where the elastic modulus is at a minimum.

The stress-strain curve and its parameters such as the changes in the elastic modulus as a function of elongation, and the tensile at break, describe properties of the tape which are important for its handlability. Other tape parameters also become important, especially properties of the tape after it has been wrapped around a body. Examples of these are the stress relaxation of the tape as a function of time and temperature. The stress relation can be measured by using the method described in DIN 53441 (Deutsche Industrie Norm or German Industry Standard). The results of the measurements quantitatively describe the behavior of the tape after elongation and especially describe the tendency of the tape to return to its original dimensions. They are a measure of the forces that the tape exerts upon the object around which it has been wrapped. According to the present invention, it is preferred that the forces exerted upon the body which has been wrapped are less that those exerted by traditional tapes used for this purpose. Preferably, the tape of the invention has a stress relaxation which is largely independent of the elongation and which preferably has a value of about 20 to 90%. Especially preferred is about 30 to 50%.

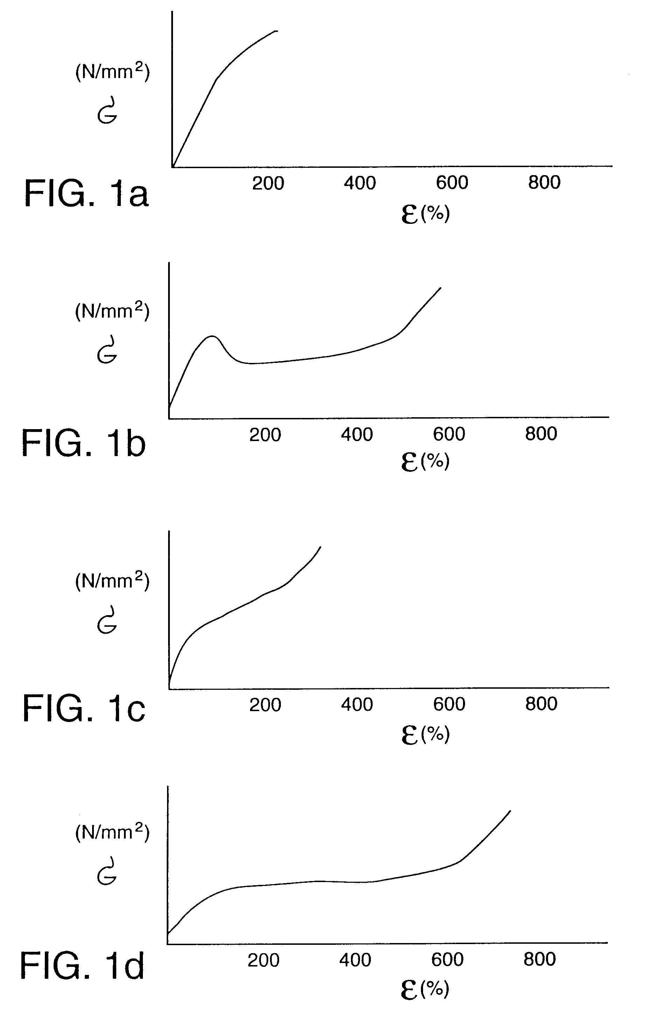

As shown specifically in Fig. 1 which follows, the stress-strain or tensile vs. elongation behavior of the tape of the invention differs from the physical behavior of plastic tapes which have been used up to the present for wrapping of objects, and especially differs from PVC tapes, above all by means of the presence of a plateau in the tensile value in the area of intermediate elongations.

It has been demonstrated that the appearance of a maximum in that area of the stress-strain curve lying at the border between the first and second areas (this maximum ending in an area having a negative value for the elastic modulus) leads to an undesirable behavior of the tape and is, therefore, not preferred in practice. When the stress-strain shows no maximum, an elongation of the tape without the generation of a wrinkled appearance is assured. With a tape of this type it is possible to provide a wrapping for irregularly-shaped bodies which is also largely free of wrinkles, waves or folds.

The material for the plastic tapes of the current invention can be selected from all manner of materials which meet the above-named criteria for the stress-strain curve. The specific selection of a suitable plastic meeting the above-named criteria is an indispensable pat of the invention. Preferred are plastic tapes made of materials which contain no chlorine, especially polyolefins, ethylenepropylene copolymers, acrylic esters or vinyl acetate. The material for the plastic tape should be free of plasticizer because upon aging the plasticizer migrates out of materials, thus making the tape brittle. The plasticizer can migrate into the object which has been wrapped, as well, for example into the insulation material of tubes or cables which have been wrapped, thus altering their properties in an undesirable manner. In the instance of the tape of the present invention which is constructed as an adhesive tape and where a layer of adhesive has been applied to the plastic tape, the plasticizer can also migrate into the adhesive layer and alter its properties in undesirable ways. The proper selection of a suitable plastic material having the desired stress strain behavior is an essential element of this invention.

According to the present invention, preferred materials for the plastic tapes are inexpensive and such that they can be modified by traditional pigments and additives to suit different applications. The materials should not be brittle at low temperature, for example not as brittle as plasticized PVC, and should be stable at elevated temperatures, the latter being more feasible due with the present invention due to the absence of plasticizer.

An especially preferred plastic tape for the present invention is "Soft Blown" polypropylene film XBPP-14.0, available from Consolidated Thermoplastics, Schaumberg, Illinois, USA. This material is presumably a poly(ethylene-propylene) copolymer containing vinyl acetate as comonomer, such material having a certain amount of orientation.

Additives such as flame retardants can be mixed into the material used for the plastic tape, so that specific safety requirements can be met. These additives must be selected so that the basic elongation behavior of the tape is not disadvantageously affected.

The invention also provides an adhesive tape, whereby the plastic tape with the aforementioned properties is used as a backing. An "adhesive tape" is herein understood to mean a plastic tape which, due to a surface treatment, shows a certain tackiness on at least one of its major surfaces. This surface treatment can be a chemical as well as a physical treatment. For example, one could pretreat a surface of the plastic tape in question with a primer or with a corona discharge and then apply an adhesive, so as to form the desired adhesive layer.

A pressure-sensitive adhesive can be used as the adhesive layer, for example, this being applied to the plastic tape by traditional methods. The properties of the plastic tape used as carrier and the adhesive are preferably suited to one another. The adhesive can be filled with additives as well, such as flame retardants.

The side of the plastic tape opposite the side bearing the adhesive can also be subjected to treatment for modification of its adhesive properties. For example, this side can be treated with an adhesive-repellent layer (LAB coating), so as to provide for ease of unrolling the adhesive tape which is normally wound upon itself in roll form. Preferably, the unwind force has a value of about 2 to 5 $N/mm^2$. Especially preferred is an unwind force of about 2 to 3 $N/mm^2$. If the unwind force is too low, then the roll can unwind under the force of gravity alone. This makes the roll difficult to handle, for example, when a body is wrapped with the tape. If the unwind force is too high, unrolling the tape is also difficult, because in this case the user needs too much force to unwind the adhesive tape.

The tape of the present invention has preferably a width of 15 to 25 mm. Especially preferred is a width of about 19 mm. A width of these approximate dimensions can be used easily to wrap an object.

The process of the current invention allows a person to perform the wrapping operation with limited strength and without tools. In the non-elongated form or at low elongations, the tape can be easily manually separated from the roll, especially in the direction perpendicular to the tape length. At higher elongations the tape becomes oriented, whereby its strength and especially its tear resistance are increased. The tearing behavior at higher elongations also makes it possible to apply the tape wrapping using mechanical means.

The finished wrapping lies snugly around the wrapped body and, by means of overlapping wrapping, offers a method of protection against external conditions, such as dust or fluids. When only a mechanical bundling is required, the tape can be extended to its full length and used as an open winding. Using this method, the material use is minimized. The high flexibility of the wrapping also imparts the wrapped body itself with a certain flexibility, so that it can be mounted, for example. The low elasticity of the tape, even at high elongations, reduces the pressure on the body and prevents the sealants from being squeezed out, for example, or prevents the sensitive parts of the wrapped body from being damaged.

The body which is wrapped by the process of the present invention can consist of single lines or cables which are to be bundled together and wrapped. The process of the present invention is intended especially for use with cable harnesses in the automotive industry.

The process of the present invention can also be used for other wrappable objects, especially those which are irregularly-shaped, for protective as well as decorative purposes. The process of the present invention can also be used for medical purposes.

The process of the present invention can be used to make wrappings of variable thicknesses as well. In this method the tape can be wrapped around an object on its ends in a relatively extended state and in the middle area in a relatively unextended state, whereby a thicker wrapping is generated in the middle area.

The process of the present invention can also be carried out so that first one or two wrappings are made with 50% overlap and no elongation, and then further wrappings are made with elongations in the area of plastic deformation, and then finally end-wrappings are made with tape in a largely non-elongated state. Separation of the tape from the roll is then easily effected by hand. The final wrapping can also be performed with tape in a highly elongated state. The separation of the tape from the roll can be achieved only with great force, however, and can be performed with a machine.

A visual comparison of a cable bundle wrapped using the process of the present invention with a cable bundle wrapped with traditional PVC tape shows that employment of the process of the present invention results in excellent conformability of the tape, even with irregularly-formed cable bundles, and that no gaping holes in the wrapping are visible. In the area where an open wrapping is desirable, the tape can be stretched extensively using the process of the present invention so that less material is used. The thickness of the wrapping can be easily controlled by the degree of elongation of the tape.

The invention is further explained in the following drawings. These are:

Fig. 1    A, B, C and D. Four typical stress-strain (tensile vs. elongation) curves of different materials for comparison

Fig. 2    An optimal stress-strain curve as well as the dependence of the elastic modulus upon the elongation for a tape of the present invention

Fig. 3    Curves of the preferred maximum and minimum tensile strength as a function of elongation for a tape of the present invention

Fig. 4    Curves of the preferred maximum and minimum of the elastic modulus as a function of elongation for a tape of the present invention

Fig. 5    A stress-strain curve as well as the dependence of elastic modulus on elongation for an ethylene-propylene copolymer embodiment of the present invention

Fig. 6    A stress-strain curve as well as the dependence of elastic modulus upon elongation for a traditional PVC tape, and

Fig. 7    Stress relaxation as a function of time at several elongations for an embodiment of the invention and a traditional tape, for comparison.

Fig. 1A shows a stress-strain curve ($\sigma/\epsilon$ curve) for a traditional PVC tape where tensile largely increases with elongation up to the breaking point. A tape of this type requires a great deal of energy to wrap it around an object and does not provide a smooth, wrinkle-free wrapping.

Fig. 1B shows a typical stress-strain curve of an LLDPE (liner low density polyethylene) tape having a maximum, that is, a yield point. With this kind of tape, wrapping can lead easily to exceeding the yield point and lead to an uncontrolled elongation of the tape. It is then hardly possible to wrap the tape in a wrinkle-free manner.

Fig. 1C shows a transition between the stress-strain curve like that of Fig. 1A and a curve like that of Fig. 1D, having a plateau and a largely ideal behavior for a tape used to wrap around an object.

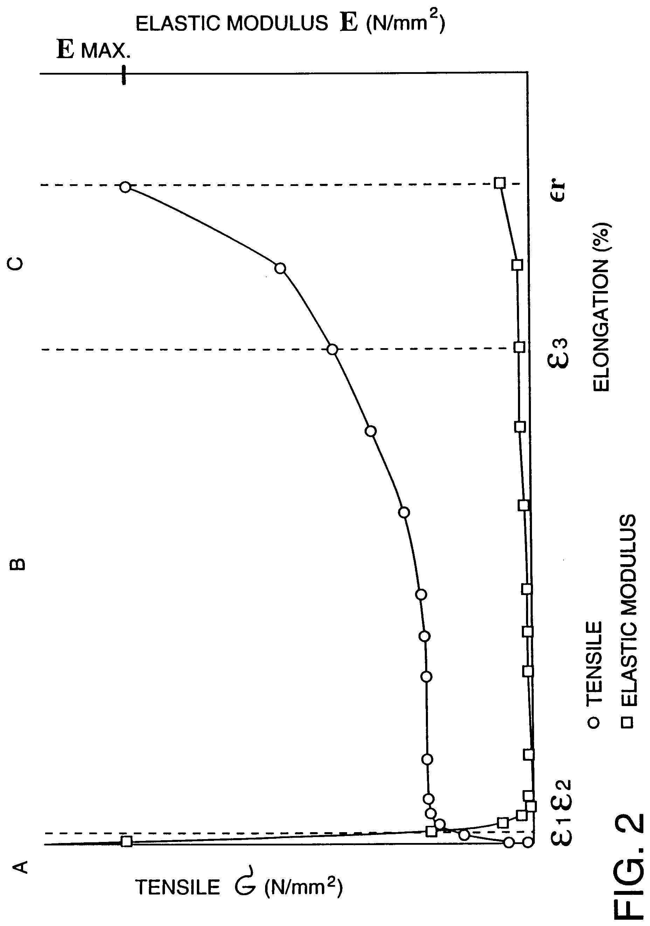

Fig. 2 shows an optimal stress-strain curve $\sigma/\epsilon$ curve) for a tape of the present invention, especially a plastic tape with the preferred elongation areas, which is especially suitable for use in the process of the present invention. At low elongations, the tape extends in an elastic fashion in the first small area A, that is, the elongation conforms to Hooke's Law. After a transition area A' where the elastic modulus drops off, follows a second area B with a wide plateau of plastic deformation with a very low increase in the tensile, if any, and small values for the elastic modulus E, whereby E is always greater than or equal to zero. At the end of the elongation is the third area C with a large rise in the tensile as a function of elongation which ends in the breaking point.

$\epsilon_1$ is the elongation on the border between area A and area B and is determined by the elastic modulus. The following relationship is valid:

$$E(\epsilon_1) = 0.25 \, E_{max} (0 - \epsilon_1)$$

where $E(\epsilon_1)$ is the elastic modulus at $\epsilon_1$ and $E_{max} (0 - \epsilon_1)$ is the maximum of the elastic modulus in the area between 0 and $\epsilon_1$.

$\epsilon_2$ is the elongation where the elastic modulus shows a minimum value. The minimum value is preferably about zero.

$\epsilon_3$ is the elongation on the boundary between areas B and C, whereby the border area is defined by the tensile $\sigma$. The following relationship applies:

$$\sigma_3(\epsilon_3) = 2 \cdot \sigma_1(\epsilon_1)$$

whereby $\sigma_3$ is the tensile at $\epsilon_3$ and $\sigma_1$ is the tensile at $\epsilon_1$.

$\epsilon_r$ is the breaking point at the end of the area C and is determined by the final limit of the tensile. Preferably, the relationship

$$\sigma_r \gg \sigma_3 (\epsilon_3)$$

is valid, where $\sigma_r$ is the tensile at break and $\sigma_3$ is the tensile at $\epsilon_3$. Preferably, the condition $\sigma_r \geq 2 \cdot \sigma_2$. Especially preferred is the condition $\sigma_r \geq 3 \cdot \sigma_2$, whereby $\sigma_2$ is the tensile at $\epsilon_2$. In the area C, there is again a large increase in the elastic modulus. The area C, which is very different from area B, hinders an easy and unintentional breaking of the tape while it is being wrapped under the conditions prevailing in area B.

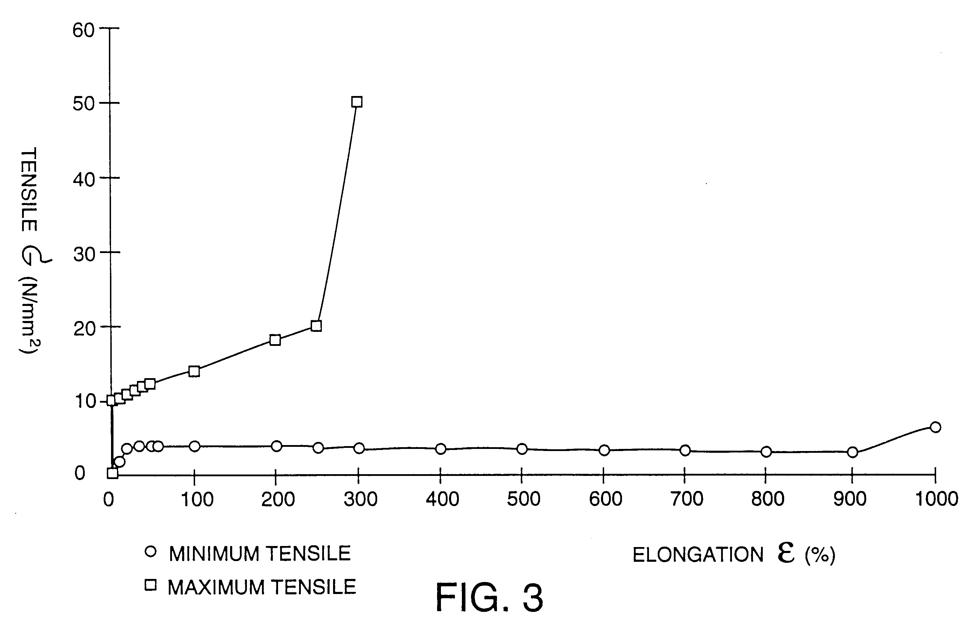

Fig. 3 shows the preferred limits (minimum and maximum) of the invention in the form of an envelope of curves in which the tensile as a function of elongation can fall. For very small elongations, the maximum value of the tensile is 10 N/mm$^2$. After the maximum allowed increase in tensile in the area of plastic deformation and after the tensile exceeds the value $\epsilon_3$ 250%, the slope increases even more and reaches a

maximum value at $\epsilon_r$ = 300% of 50 N/mm². The lowest allowed value of the tensile shows an extended plateau in the area of plastic deformation, followed by an increase in slope starting at $\epsilon_3$ 900% and reaching a minimum value of tensile at break of 10 N/mm².

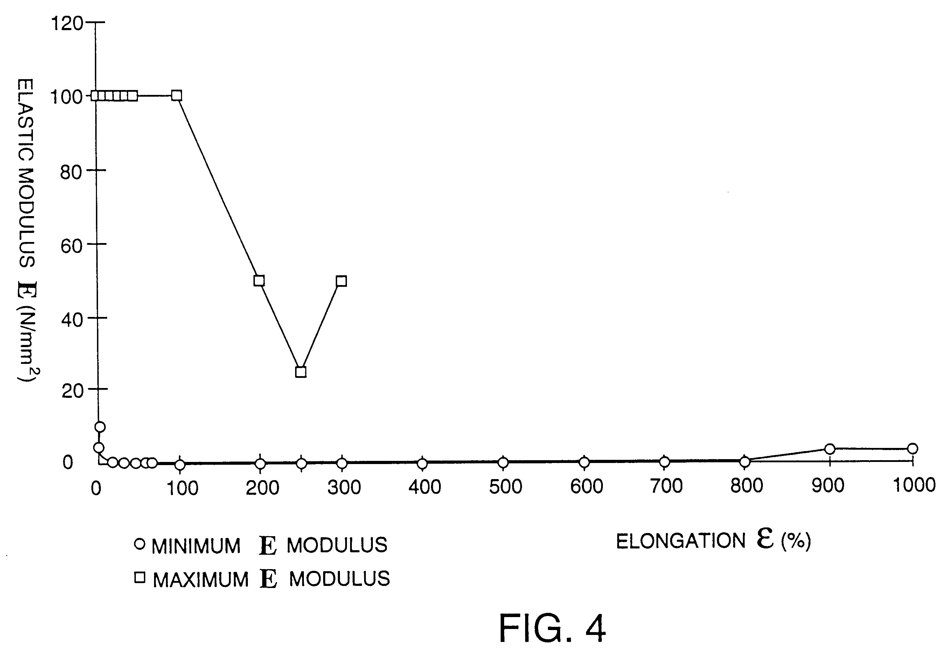

Fig. 4 shows, in a similar fashion to Fig. 3, an envelope of the preferred limits (maximum and minimum) of the present invention in which the elastic modulus as a function of elongation can fall.

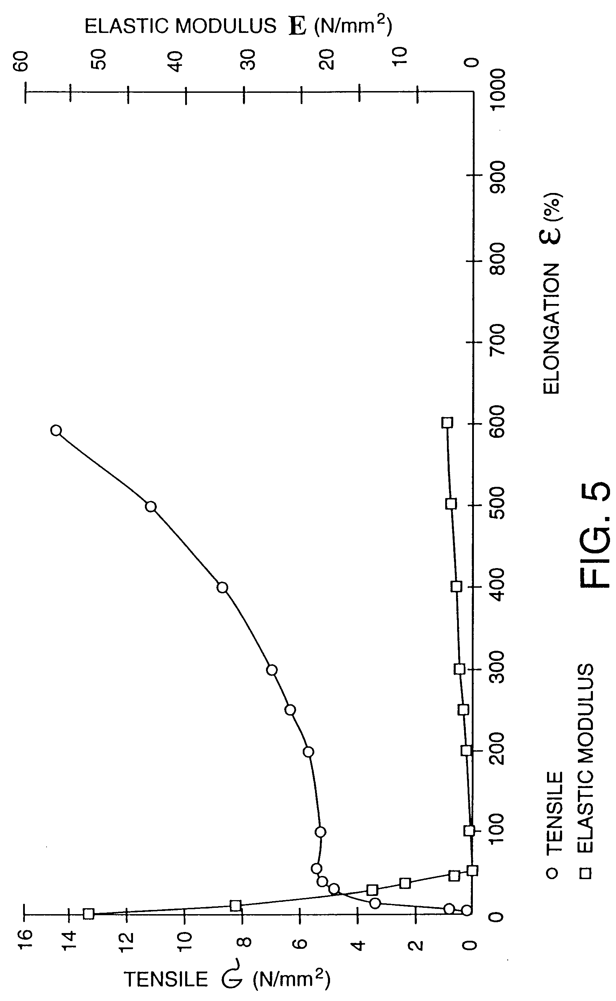

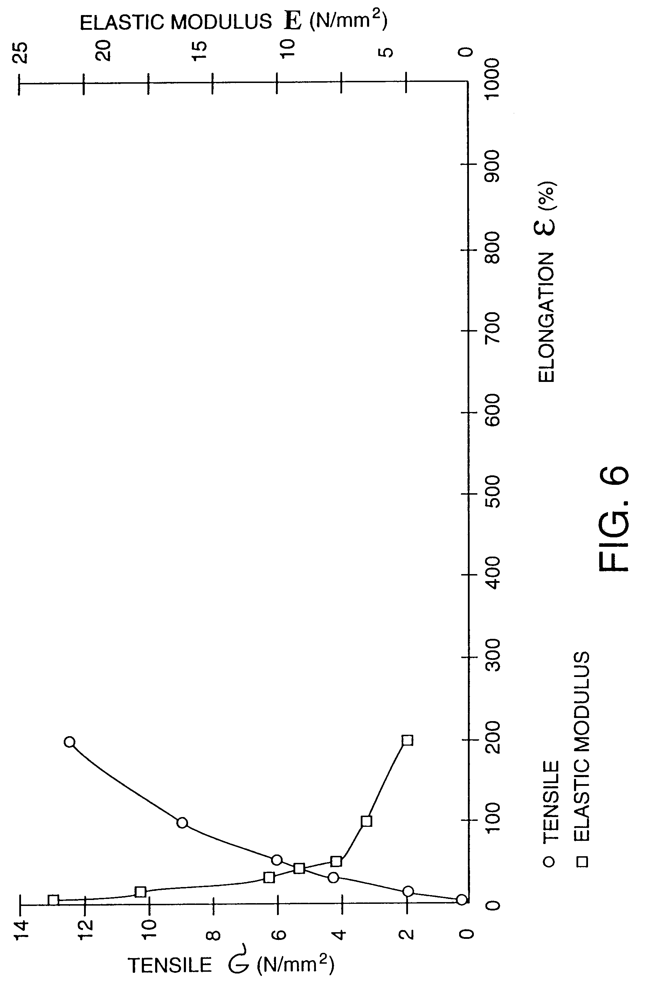

Figures 5 and 6 represent actual stress-strain curves as well as the behavior of the elastic modulus for an embodiment of the invention (Fig. 5) and for a traditional plastic tape used for wrapping objects (Fig. 6). Measurements were carried out using ASTM D-882 on uncoated tapes and represent the nominal $\sigma/\epsilon$ curves. These curves show the quantitative behavior of the plastic tapes while they are being applied to an object.

The tape of the invention used to generate Fig. 5 is a copolymer of ethylene and propylene in a ratio of 65:35 to 84:15. The stress-strain curve of this example shows the areas A to C as described previously. The purely elastic area within the area A is relatively small in this case. The plateau of the tensile value in area B lies between about 5 N/mm² and about 15 N/mm² (at the maximum tensile at break). The elastic modulus in the entire area of the plateau lies significantly under 1 N/mm². The elongation at break is about 600%.

Fig. 6 shows a stress-strain curve and the behavior of the elastic modulus of a PVC tape, the state-of-the art for wrapping of objects. The tape breaks at only 200% elongation. The tape displays an initial area which is largely elastic and breaking occurs before the minimum of the elastic modulus is reached.

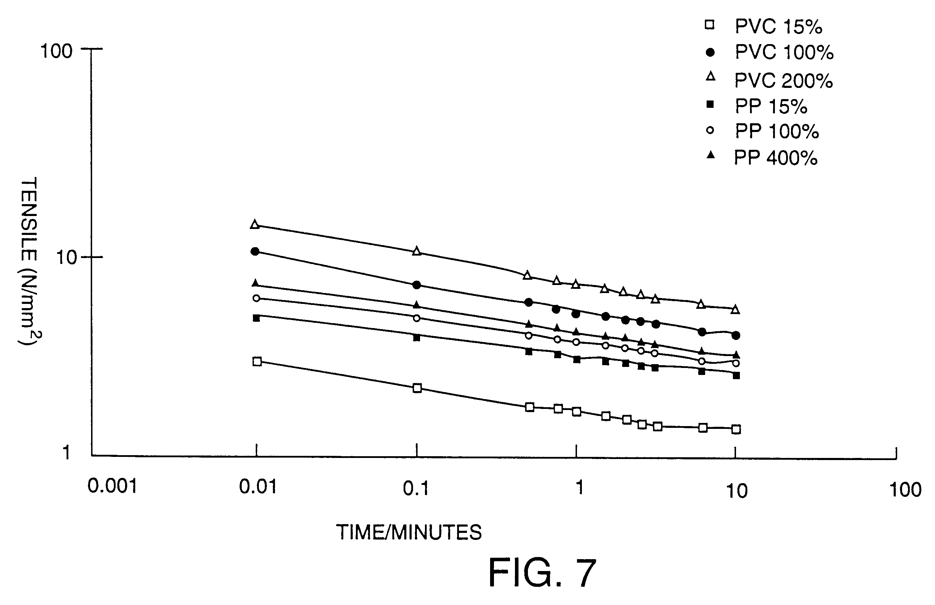

Fig. 7 shows for comparison the stress relaxation curves at various elongations for an example of a tape used in the process of the present invention comprising a film of the type "Soft Blown" PP XBPP-14.00 manufactured by Consolidated Thermoplastics, and a PVC tape normally used for wrapping of objects. The stress relaxation was measured using DIN 53441. This test simulates the wrapping of an object very well. After application of a tape with a certain amount of tension, the plastic tape relaxes and assumes a lower state of stress. In order to compare known PVC tapes with those PP tapes of the invention, samples of both tapes were subjected to a certain elongation. Then the stress was measured as a function of time. To provide a better representation of the behavior, the curves were transformed into stress vs. time curves with a logarithmic scale. Fig. 6 shows a comparison of logarithmic curves of this kind. The important difference between the known PVC tapes and the PP tape of the invention is the increase in the tension at higher elongations. The family of curves for the PP tape of the invention lie relatively close together, meaning that the resulting tension is relatively independent of the extent to which the tape is elongated. This represents a decisive advantage during wrapping of irregularly shaped objects. For the PVC tape, there are no stress-relaxation curves for elongations of greater than 200% because at that point the PVC tape has already broken.

Measurements at various temperatures have shown that the PP tape of the present invention also has an improved behavior at elevated temperatures. At 120° C, for example, a 600% elongated PP tape gives better results than a PVC tape which has only been elongated to 15%.

**Examples**

A total of twenty-five different plastic tapes were tested, these being shown in Table I. Table II shows properties for the tapes

Examples 1 through 4 are especially preferred. No yield point, that is, no negative elastic modulus, can be measured. The tensile in the plateau area B lies between 5 and 10 N/mm² and is always less than 30% of the tensile at break. For some examples in this group the tensile at break lies partly in the area of about 600% and for other examples in an area well over 600%.

The tapes of Examples 5 through 7 are also well-suited to the process of the present invention. Admittedly, the ratio of the tensile in the plateau to the tensile at break is relatively high in Example 5, while in Examples 6 and 7 the tensile in the area of the plateau is relatively low.

In the tapes described as Examples 8 through 11, the elongation at break is relatively low and is always less than 600%. Additionally, in Examples 8, 9 and 11 the ratio of the plateau tensile to the tensile at break is relatively high. Admittedly, the tapes of these examples are also suitable for the process of the present invention.

The tape of Example 12 shows a very high tensile in the plateau as well as a relatively high ratio of plateau tensile to tensile at break. The elongation at break is fairly low, as well. This tape is less suitable for the process of the present invention.

In Examples 13 through 16, there is no recognizable plateau in area B. These tapes can be considered to represent comparative examples which are not suitable for the process of the present invention.

In each of the Examples 17 through 25, there is a yield point, that is, an area with a negative elastic modulus. For this reason, these tapes are also not suitable for the process of the present invention and can be considered to be comparative examples, as the wrapping behavior is influenced in a negative manner by the presence of the yield point.

Table 1

| Example No. | Material Group & Composition | Additional Material Data | Backing Supplier Name | Backing Identification |
|---|---|---|---|---|
| 1 | P-E-Copolymer | | Consolidated Thermoplastics | 3651 Experimental Films |
| 2 | P-E- Copolymer 85% PP, 15% PE | Mw 6056x10³ Mn 7.50 x 10⁴ P 8.75 | Consolidated Thermoplastics with Adhesive | XBPP 15.2 Exp. Film coated |
| 3 | P-E- Copolymer 85% PP 15% PE | Mw 5.75 x 10⁵ Mn 8.06 x 10⁴ P 6.91 | Consolidated Thermoplastics | XBPP 15.2 Exp. Film coated with Adhesive, re-extruded film |
| 3a | P-E- Vinylacetate 92.3% PE, 3.4% PP 3.3% VA | Mw 2.19 x 10⁵ Mn 5.97 x 10⁴ P 3.67 | EXXON | 107 a Exp. Film |
| 4 | P-E- Copolymer 85% PP, 15% PE | Mw 4.50 x 10⁵ Mn 7.38 x 10⁴ P 6.10 | Consolidated Thermoplastics | XBPP 15.2 Exp. Film, recycled, coated with adhesive |
| 5 | Elastomeric alloy 86.7% PE, 7.9% PP 5.4% EVA | Mw 1.96 x 10⁵ Mn 5.67 x 10⁴ P 3.58 | EXXON | EA 02 |
| 6 | Elastomeric alloy 81.7% PEm 14% PP 4.3% EVA | Mw 2.24 x 10⁵ Mn 6.73 x 10⁴ P 3.33 | EXXON | EA 001 as EA 02 with 10% LLDPE film |
| 7 | P-E- Copolymer | | Consolidated Thermoplastics | XBPP 15.2 Exp. Film coated with Adhesive |
| 8 | Ethylmethacrylate | | EXXON | EMA Experimental Film |
| 9 | P-E- vinylacetate Copolymer 90.8% PE, 2.0 PP 7.2% VA | Mw 1.04 x 10⁵ Mn 7.11 x 10⁴ P 14.55 | EXXON | EVA 2 Experimental Film |
| 10 | PE | | HIMONT | HIFAX FX 7029 TR 1107 |
| 11 | PTFE | NOWOFLON ET Film (Hostaflon) | NOWOFOL | 6235 Standard Film |

| Example No. | Material Group & Composition | Additional Material Data | Backing Supplier Name | Backing Identification |
|---|---|---|---|---|
| 12 | PVC | | 3M | # 33 + PVC Standard Tape |
| 13 | PE | | Norgeplaster | NP PE Standard Tape |
| 13 | PVC | | 3M | # 39 PVC Standard Tape |
| 14 | PUR | Desmopan 385 | Bayer | VP 7100 AK exp. film |
| 15 | LLDPE | | Consolidated Thermoplastics | LA 10 exp. film |
| 16 | P-E- Copolymer | | BASF | 9147 exp. film |
| 17 | P-E- Copolymer | | BASF | 2900 HX Standard Film |
| 18 | PE | | Rotunda | 2901 Standard Tape |
| 19 | P-E- Vinylacetate Copolymer 94.0% PE, 2.7 % PP, 3.3 VA | Mw 1.41 x 10$^5$ Mn 3.56 x 10$^4$ P 3.96 | EXXON | EVA 1 Exp. Film |
| 20 | P-E- Copolymer | 50% Tajens S Additive | Consolidated Thermoplastics | |
| 21 | PE | | HIMONT | HIFAX FX 7029 XCP Exp. Film |
| 22 | PE + SBS | | HIMONT | HIFAX FX 7029 XCP Exp. Film |
| 23 | PE modified | | SHELL | PL7 832 Exp. Film |

| | | | | | |
|---|---|---|---|---|---|
| P | Propylene | E | Ethylene | P | Polydispersity |
| PP | Poly-Propylene | PE | Polyethylene | | |
| VA | Vinylacetate | EVA | Ethylene-Vinylacetate | | |
| Mw/Mn | Molecular weight values | | | | |

Table 2

| Example No. | Material Group & Composition | Elongation % | Tensile N\mm$^2$ | Plateau N\mm$^2$ | Ratio of Tensile/Tensile at Plateau N\mm$^2$ |
|---|---|---|---|---|---|
| 1 | P-E-Copolymer | 1130 | 28 | 6 | 22 |
| 2 | P-E- Copolymer 85% PP, 15% PE | 890 | 20 | 5 | 27 |
| 3 | P-E- Copolymer 85% PP 15% PE | 680 | 28 | 8 | 29 |
| 4 | P-E- Vinylacetate 92.3% PE, 3.4% PP 3.3% VA | 650 | 19 | 7 | 38 |
| 5 | Elastomeric alloy 86.7% PE, 7.9% PP 5.4% EVA | 620 | 16 | 3 | 19 |
| 6 | Elastomeric alloy 81.7% PEm 14% PP 4.3% EVA | 620 | 17 | 3 | 18 |
| 7 | P-E Copolymer | 520 | 12 | 5 | 41 |
| 8 | Ethyl Methacrylate | 400 | 18 | 8 | 42 |
| 9 | Vinylacetate | 530 | 27 | 6 | 22 |
| 10 | P-E | 410 | 15 | 6 | 38 |
| 11 | PTFE | 300 | 51 | 26 | 51 |
| 12 | PVC | 290 | 17 | | |
| 13 | PE | 140 | 14 | | |
| 14 | PVC | 330 | | | |
| 15 | polyurethane | 340 | 57 | | |
| 16 | LLDPE | 860 | 33 | | |
| 17 | P-E Copolymer | 710 | 36 | | |
| 18 | PE Copolymer | 640 | 28 | | |
| 19 | P-E | 340 | 11 | | |
| 20 | Vinylacetate | 530 | 20 | | |
| 21 | PE | 460 | 20 | | |
| 22 | PE + SBS | 450 | 19 | | |
| 23 | PE (modified) | 18...490 | 20 | | |

## Claims

1. A plastic tape having a stress-strain curve plotting tensile vs. elongation comprising the following areas:
   a) an initial, largely elastic area (A) where the tensile $\sigma$ is shown as a function of elongation $\epsilon$, where $\epsilon$ is between 0 and $\epsilon_1$,
   b) an area of plastic deformation (B), adjacent to area (A), where $\epsilon$ is between $\epsilon_1$ and $\epsilon_3$ and where the slope of the curve is zero or has a small positive value, and
   c) an area (C), where $\epsilon$ is between $\epsilon_3$ and $\epsilon_r$, where $\epsilon_r$ is the elongation at break, and where the slope of the curve is greater than the slope in area (B).

2. Tape according to claim 1, whereby $\epsilon_1$ is the elongation where the elastic modulus is one-quarter of its maximum value between 0 and $\epsilon_1$, and whereby $\epsilon_3$ is the elongation where the tensile is twice as large as at $\epsilon_1$.

3. Tape according to claim 1 or 2, whereby the largely elastic area (A) shows a transition area (A') to area (B).

4. Tape according to one of the claims 1 through 3, where the maximum value of the elastic modulus of the tape is at least 10 $N/mm^2$ and preferably at least 20 $N/mm^2$.

5. Tape according to one of the claims 1 through 4, where the elastic modulus in area (B) is less than 5 $N/mm^2$, preferably less than 2 $N/mm^2$.

6. Tape according to one of the claims 1 through 5, whereby the elongation $\epsilon_3$ of the tape is greater than 250% and preferably greater than 400%.

7. Tape according to one of the claims 1 through 6, whereby the elongation $\epsilon_r$ of the tape is greater than 300%, preferably greater than 600%.

8. Tape according to one of the claims 1 through 7, whereby the tape has a tensile of from about 10 to 50 $N/mm^2$ at $\epsilon_2$, whereby $\epsilon_2$ is the elongation where the elastic modulus shows its minimum value and where the relationship $\epsilon_1 \leq \epsilon_2 \leq \epsilon_3$ is valid.

9. Tape according to one of the claims 1 through 7, whereby the tape has a tensile of from about 3 to 10 $N/mm^2$ at $\epsilon_2$, preferably 5 to 10 $N/mm^2$, whereby $\epsilon_2$ is the elongation where the elastic modulus shows its minimum value and where the relationship $\epsilon_1 \leq \epsilon_2 \leq \epsilon_3$ is valid.

10. Tape according to one of the claims 1 through 9, whereby the tensile at break of the tape is at least twice as great as the tensile at the elongation $\epsilon_2$, preferably at least three times as great as the tensile at $\epsilon_2$.

11. Tape according to one of the claims 1 through 10, where the tape has a stress relation which is largely independent from the elongation and has a value of 20 to 90%.

12. Tape according to one of the claims 1 through 11, where the tape comprises an ethylene-propylene copolymer, a methacrylic acid ester or ethylene-propylene-vinyl acetate copolymer.

13. Tape according to one of the claims 1 through 12, where the surface of the tape is treated on at least one of its two major surfaces and shows a certain tackiness, is preferably coated with adhesive, and whereby the tape is preferably treated on its opposite major surface to modify the adhesion characteristics.

14. Adhesive tape with a plastic tape as carrier and an adhesive layer applied to at least one side of the plastic tape, whereby the plastic tape has a stress-strain curve comprising the following areas:
    a) an initial, largely elastic area (A) where the tensile $\sigma$ is shown as a function of elongation $\epsilon$, where $\epsilon$ is between 0 and $\epsilon_1$
    b) an area of plastic deformation (B), adjacent to area (A), where $\epsilon$ is between $\epsilon_1$ and $\epsilon_3$ and where the slope of the curve is zero or has a small positive value, and
    c) an area (C), where c is between $\epsilon_3$ and $\epsilon_r$, where $\epsilon_r$ is the elongation at break, and where the slope of the curve is greater than the slope in area (B).

15. Process for manufacture of a body which is wrapped with plastic tape, whereby a tape is employed whose stress-strain curves have the following characteristics:
    a) an initial, largely elastic area (A) where the tensile $\sigma$ is shown as a function of elongation $\epsilon$, where $\epsilon$ is between 0 and $\epsilon_1$,
    b) an area of plastic deformation (B), adjacent to area (A), where $\epsilon$ is between $\epsilon_1$ and $\epsilon_3$ and where the slope of the curve is zero or has a small positive value, and
    c) an area (C), where C is between $\epsilon_3$ and $\epsilon_r$, where $\epsilon_r$ is the elongation at break, and where the slope of the curve is greater than the slope in area (B).

16. Process according to claim 15, whereby the body which is to be wrapped comprises at least two members which form a bundle, whereby the bundle comprises separate electrical lines, hydraulic lines, fiber optic cables or other lines or cables.

17. Process according to claim 15 or 16, whereby the tape is wrapped around the body several times and where the tape is wrapped around certain areas of the body in elongated state and other areas in largely non-elongated state, so that the wrapping comprises various thicknesses.

18. Process according to one of the claims 15 through 17, comprising the following steps:
    a) wrapping at least one winding around the body with the tape in non-elongated state,
    b) wrapping further windings with the tape in elongated state,
    c) applying an end-wrapping with tape in largely nonelongated state, and
    d) manually tearing off the end of the tape from the roll.

19. Process according to claim 18, modified in that in step c) at least on end-wrapping is performed with tape in highly elongated state and where the separation from the roll is influenced by the significant increase in tensile strength.

20. The use of a tape for manufacture of a tape-wrapped body, whereby the tape has the characteristics described in claim 1 through 14.

(N/mm²)

$\sigma$

**FIG. 1a**

200    400    600    800

$\varepsilon$ (%)

(N/mm²)

$\sigma$

**FIG. 1b**

200    400    600    800

$\varepsilon$ (%)

(N/mm²)

$\sigma$

**FIG. 1c**

200    400    600    800

$\varepsilon$ (%)

(N/mm²)

$\sigma$

**FIG. 1d**

200    400    600    800

$\varepsilon$ (%)

FIG. 2

FIG. 3

FIG. 4

FIG. 5

FIG. 6

○ TENSILE
□ ELASTIC MODULUS

FIG. 7